# EUROPEAN PATENT SPECIFICATION

(11) **EP 1 800 975 B1**
(45) Date of publication and mention of the grant of the patent: **30.06.2010**
(21) Application number: 06125830.7
(22) Date of filing: 11.12.2006
(51) Int. Cl.: B60R 25/00, G07C 9/00

(54) **Improved key and access system**
Verbessertes Schlüssel- und Zugriffssystem
Système d'action et clé améliorée

(30) Priority: 23.12.2005 GB 0526285
(43) Date of publication of application: 27.06.2007
(73) Proprietor: Nissan Motor Manufacturing (UK) Ltd., Cranfield Bedfordshire MK43 0DB (GB)
(72) Inventor: Breen, Simon Nissan Motor Manuf.(UK)Ltd Nissan, Cranfield, Bedfordshire MK43 0DB (GB)
(74) Representative: Hufton, Victoria Alice

(56) References cited:
- EP-A- 1 429 294
- FR-A1- 2 859 493

## Description

The present invention relates generally to a device and method for controlling access to a secured location, in particular, an entry system to a vehicle. The present invention also relates to keyless access systems.

In recent years, traditional mechanical keys have either been augmented with electronic functions in order to increase entry system security or, in some cases, have been replaced by electronic key systems where an identification code (ID code) is transmitted from the key device to an entry system in order to gain access to a secured location.

Many vehicles, for example, are now accessed by a mechanical key that also incorporates a transponder located within the key device. The transponder carries an encrypted code which represents a greater number of access combinations than can be provided by the mechanical key alone.

In use, the mechanical key is introduced into the door lock or ignition lock of the vehicle and the engine management system of the vehicle then issues a challenge response to the transponder key in order to verify the key. This challenge is usually made upon an attempt to start the engine of the vehicle by turning the key in the ignition lock. Coupling between the key and the ignition/lock system of the vehicle is typically via an inductive coupling antenna system. Such a system either operates by amplitude modulated coupling between the key and the vehicle or the inductive coupling between the key and car is used to power up a circuit within the key to allow a transmitter within the key to transmit the transponder code to the vehicle.

Although the presence of the transponder increases the security of the key, a theft method has arisen which exploits the functioning of the key and the transponder. The method, which is detailed below, is often referred to as rental mode theft since it is a particularly popular way of stealing rental or agency cars.

In rental mode theft, the transponder (i.e. the coded integrated circuit within the key) is physically removed from the key and is replaced with a scrap unit from, for example, a scrap vehicle. The extracted transponder is then fixed to the inner trim surface of the vehicle steering cover such that it is close enough to the ignition reader to be read when the ignition is switched on. The mechanical key is then copied and the original key (with the scrap transponder) is returned to the hire company at the end of the vehicle hire. The vehicle can then be stolen using the copy of the mechanical key. It is not even necessary for the thief to employ a scrap transponder if the key being returned gives no visual indication that it has been tampered with.

A countermeasure against this form of theft is described in GB 2329053 in which a vehicle access system attempts to read the transponder when the mechanical key is not present in the ignition lock. If the transponder is detected in the absence of the key, then the access system can take an appropriate action. For example, the immobiliser control module could refuse to allow the car to be started or the alarm sounder of the car could sound.

More recently, vehicle keys have used the transponder as a backup entry method into the vehicle. Such keys, which are often referred to as "smart keys", transmit a key entry code from an integrated circuit to the vehicle access system in order to gain access. The transponder is located on a backup key (which may or may not be detachable from the key or key fob) for use in the event of a malfunction or battery failure of the key fob. The countermeasure method described in relation to GB 2329053 is less effective in the context of smart keys since the original transponder itself can be stolen without arousing suspicion from the legitimate owner of the vehicle, who can still gain access to the vehicle via the primary key code function of the key fob.

Document FR-A-2859493 shows a prior art system according to the preamble of claim 1.

It is therefore an object of the present invention to provide a key for an access system which substantially overcomes or mitigates the above described problems.

According to the present invention there is provided a key device for use with a complementary access system comprising a transponder, the transponder comprising a code for accessing the complementary access system; interrogation means for determining a feature of the transponder; and output means for outputting a response signal in response to the feature determined by the interrogation means.

The present invention provides a key device that may be used to operate an access system in which the key comprises a transponder having a transponder code that is capable of accessing the access system. The key device further comprises interrogation means that is arranged to interrogate and determine a feature of the transponder (e.g. what the transponder code is, whether the transponder is present within the key etc.). An appropriate response signal is then output by the key device depending on the particular feature determined by the interrogation means.

An access system, within the context of the present invention, encompasses entry systems (for example a system that controls entry to a building or vehicle) and systems that deny/control access to a resource (for example an ignition system that prevents/controls engine start).

It can be seen therefore that the key device according to the present invention is 'aware' of the transponder that is contained within it. By interrogating the transponder, the key device is therefore able to determine features or characteristics of the transponder which may then be used to ascertain whether the key device has been tampered with in any way. This is in contrast to prior art key devices in which tampering may only be evident following inspection by a user or when the key fails to operate in the normal manner.

In the invention, the key device conveniently determines whether the transponder device is within the key device. Removal of the transponder, whether authorised or unauthorised, may therefore be detected. The transponder may be incorporated within a skeleton or backup key which is removably attached to the key device and in this instance the interrogation means conveniently comprises detection means for detecting the removal of the transponder from the key device.

Conveniently, the interrogation means comprises a micro-switch that can detect removal of the transponder or the backup key from the key device. As an alternative to the micro-switch, the transponder may be associated with first antenna means and the interrogation means may be associated with second antenna means, the first and second antenna means being arranged such that the presence of the transponder within the key device can be ascertained by the second antenna means sending an interrogation signal to the first antenna means and receiving a reply.

Conveniently, the presence, or absence, of the transponder within the key device can be notified by the response signal that is output by the key device. Such a notification signal may be output as either a visual signal, for example a flashing light or series of lights, or as an audible warning.

The response signal output by the key device may further comprise a notification signal that is transmitted to the access system.

In a further embodiment of the invention, the validity of the transponder within the key device is determined. By authenticating the transponder code within the key device, a user can be notified of tampering of the key device, e.g. by the replacement of the legitimate transponder with a scrap transponder.

Conveniently, the interrogation means comprises reader means for reading the transponder code. The authentication of the transponder code may be carried out by the access system. In this case the response signal output by the key device comprises a verification request that is transmitted to the access system, the request containing the code of the transponder located within the key device. In an alternative not covered by the claims, the authentication of the transponder code takes place within the key device itself and the interrogation means may therefore conveniently validate the code against a pre-stored copy of the correct transponder code.

Authentication of the transponder code may take place periodically or alternatively each time the key device is used with the access system.

Where authentication of the code takes place within the key device, the response signal may conveniently comprise a notification signal regarding the validity of the transponder code contained within the key device. As before, the notification signal may take the form of a visual or audible notification.

The transponder may be associated with first antenna means and the interrogation means may be associated with second antenna means such that the transponder code may be determined by the interrogation means.

The transponder may be embedded within the key device or preferably may be mounted on a emergency key which, during normal key use, is stored within the key device but which is detachable from the key device in the event of failure of the key device.

The invention extends to a smart key for a keyless access system in which the key comprises a control unit, at least one access code stored within the control unit, antenna means for transmitting the access code to the access system and a key device as described above. In such a smart key the transponder would be used as a backup entry mechanism for accessing the access system in the event of failure of the main control unit contained within the smart key. It is noted that, when used with a vehicle access system, such keyless access keys are used to both gain entry to the vehicle and also to start the vehicle, i.e. to gain access to a resource.

Furthermore, according to the present invention there is provided a key device for use with a complementary access system, the key comprising a transponder, the transponder having a code for accessing the complementary access system, wherein interrogating means interrogate the transponder to determine a predetermined feature of the transponder; and output a response signal in response to the determined feature.

It is noted that preferred features relating to the second aspect of the present invention are described above in relation to the first aspect of the invention

Moreover, according to the present invention there is provided an access system for use with a complementary key device, the key device comprising a transponder having a transponder code, the system comprising: inputs for receiving a code signal from the key device, the code signal comprising the transponder code; a processor for validating the transponder code; and outputs for outputting a response signal as determined by the processor in dependence on the validity of the transponder code.

There is provided, in accordance with the present invention, an access system for use with a complementary key device, the key device comprising a transponder having a transponder code, the system comprising: inputs for receiving a signal from the key device, the signal comprising an indication of the validity of the transponder code; and means for outputting a response signal in dependence on the validity of the transponder code.

The response signal output may conveniently comprise a vehicle speed control signal that is output to one or more of the following: vehicle engine management unit, vehicle transmission; vehicle braking system. In this way, the access system may limit the speed of the vehicle in the event that the transponder is stolen. As an alternative the response signal may comprise an ignition control signal to immobilise the vehicle in the event that the transponder is stolen.

The access system may output a notification signal to the key device which comprises an indication of the validity of the transponder code.

Furthermore, according to the present invention, there is provided a method of operating an access system for use with a complementary key device, the key device comprising a transponder having a transponder code, the method comprising: receiving a code signal from the key device, the code signal comprising the transponder code; validating the transponder code; and outputting a response signal as determined by the processor in dependence on the validity of the transponder code.

Conveniently, the access system can interrogate the key device and request that the transponder code is transmitted back to it for authentication. Such an interrogation request may be transmitted each time the key device is used with the access system.

Moreover, according to the present invention there is provided a method of operating an access system for use with a complementary key device, the key device comprising a transponder having a transponder code, the method comprising: receiving a signal from the key device, the signal comprising an indication of the validity of the transponder code; and outputting a response signal in dependence on the validity of the transponder code.

The invention extends to a vehicle comprising an access system according to the present invention as described above as controlled by a key device according to the invention.

The invention may also be expressed as a data carrier comprising a computer program to implement the methods of the present invention.

The present invention will now be described, by way of example only, with reference to the following figures in which:
Figure 1 illustrates a known vehicle entry system and the steps involved with gaining access to the vehicle;
Figure 2 illustrates a known vehicle access system which utilises some of the features of the entry system of Figure 1;
Figure 3 illustrates the emergency transponder function of a known keyless access system;
Figure 4 illustrates a key in accordance with an embodiment of the present invention;

It is noted that, throughout the drawings, like numerals have been used to denote like features.

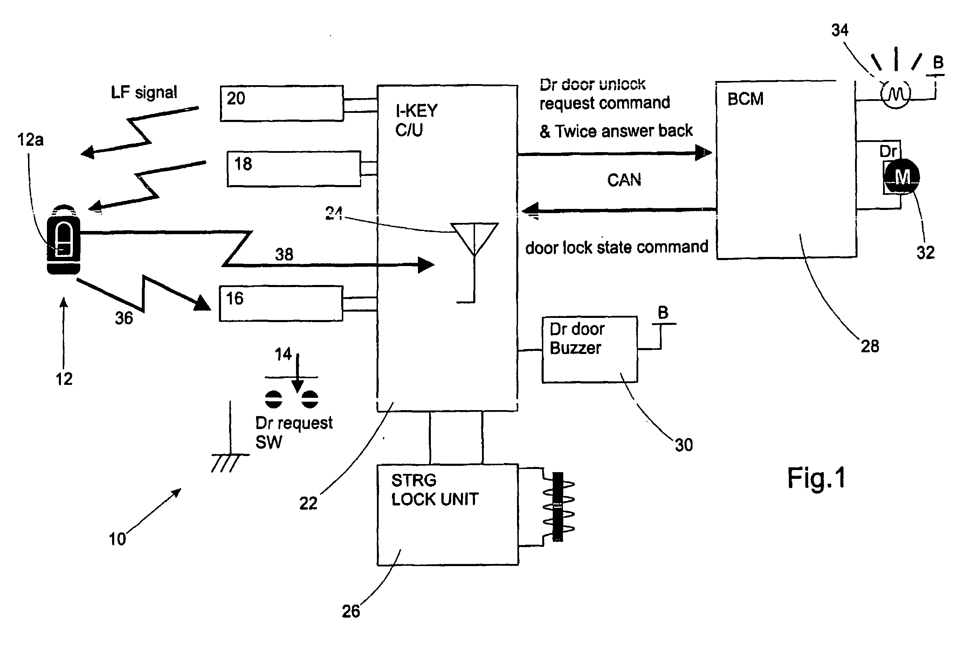

Referring firstly to Figure 1, a known entry system for a vehicle is shown generally at 10. The entry system 10 is operated by a key fob 12 and comprises a door switch 14, a door antenna 16 and cabin antennas 18, 20 which are connected to a control unit 22. The control unit 22 comprises a radio frequency antenna 24 and is also connected to a door lock mechanism 26, a body control module 28 and optionally a sounder device 30 (such as a buzzer). The body control module 28 is further connected to circuitry 32 for controlling the door opening operations and also the hazard warning lamps 34 of the vehicle.

The key fob will generally comprise a number of transmit and receive antennas (not shown in Figure 1) for communicating with the vehicle, and a battery (also not shown in Figure 1). The key further comprises a control unit (not shown in Figure 1) which stores the code (or codes) needed to gain access to the secured area. These features comprise the main or primary access/entry mechanism which is used in normal key operation. To allow entry to the vehicle in case of battery failure or any other type of key failure, the key fob will also generally further comprise a transponder located within the key. This transponder may be carried on a removable or extendible emergency key which, in normal use, will be stored within the body of the key fob. The transponder carries a transponder code which is capable of enabling access to the entry system of the vehicle and/or starting the vehicle. The transponder/emergency key comprise the backup access/entry mechanism which is used in the event of failure of the main access/entry mechanism.

In use, a user requests access to the vehicle by pressing the door switch 14. This action causes the control unit 22 to send a low frequency signal 36 (for example at a frequency of approximately 125 kHz) to the key fob 12. It is noted that the radio-wave communication between the control unit 22 and the key fob 12 is by way of electromagnetic induction. The range of this transmission is around 1 to 2 metres.

Upon receipt of the signal 36, the key fob 12 sends a radio frequency transmission 38 to the antenna 24 of the control unit 22. The transmission 38 has a range of up to 40 metres or more.

It is noted that some entry systems do not have the door switch 14 and door antenna 16 components described above and that entry to the vehicle is instead initiated by a user pressing a switch 12a on the key fob 12 which then directly outputs the radio signal 38.

Regardless of the manner in which the radio signal 38 is initiated, the signal 38 carries the preset code or codes which are stored within the main entry mechanism within the key 12. The control unit 22 receives the codes via the antenna 24 and sends them 40 to the body control module 28 which verifies the codes received. As an alternative the received codes could be verified within the control unit 22.

If the code(s) is (are) verified as correct, then the body control module sends a signal 42 back to the control unit 22 to open the door. The control unit 22 then communicates with the lock unit 26 to open the door.

Additionally, the body control module 28 may signal the hazard warning lights 34 to flash to indicate that the door(s) is (are) unlocked and the control unit 22 may additionally signal the sounder 30 to emit an audible notification that the door(s) is (are) unlocked. The body control module's circuitry 32 controls the specific doors that are unlocked.

The door entry system described above enables entry to a secured location without the need to hold or manipulate a physical key. Such systems are often referred to as "keyless" or "smart" although in the context of the present discussion the terms keyless and smart are taken to fall within the broader definition of key or key fob.

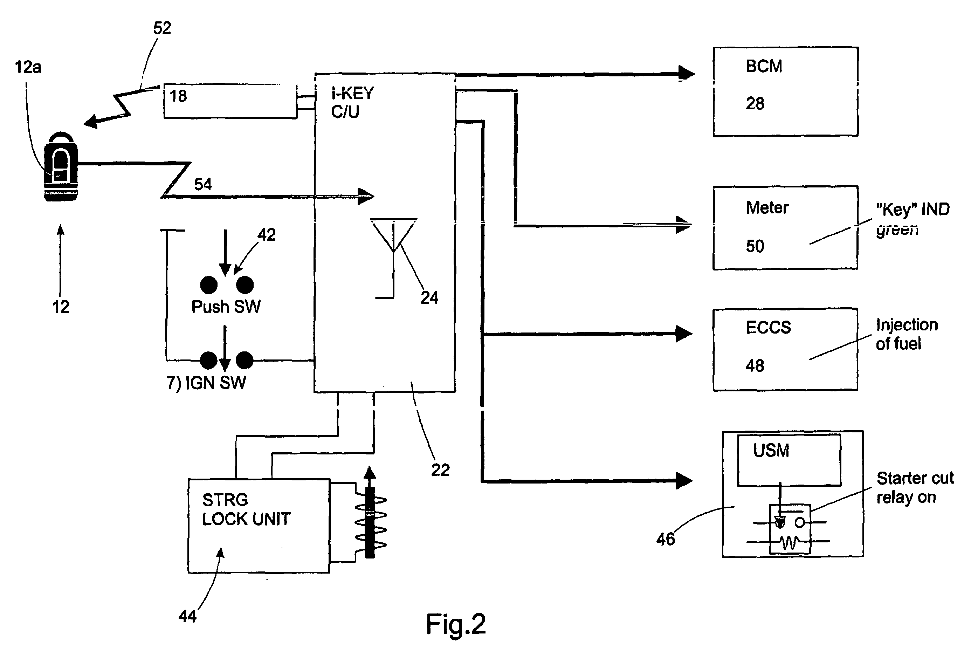

Figure 2 shows a vehicle access (ignition) system which utilises the key 12 and elements of the entry system described in relation to Figure 1. The ignition system comprises an ignition switch 42 and an ignition lock mechanism 44 which are connected to the control unit 22. The control unit 22 is connected to the starter motor 46, fuel injection system 48 and meter unit 50 (the instrument pack) and, as also described in relation to Figure 1, to the body control module 28.

Once a user has gained access to the vehicle via the procedure described in relation to Figure 1, the key 12 enables the user to start the vehicle's engine without the need for a physical key.

In order to start the vehicle, the user first pushes the ignition switch 42. A cabin antenna 18 then transmits a signal 52 via electromagnetic inductive coupling to the key 12. The key responds by transmitting a radio frequency signal 54 to the control unit 22. This signal 54 comprises one or more preset codes stored within the key 12.

It is noted that the user may alternatively send the rf signal 54 by pushing the switch 12a on the key 12.

The control unit 22 receives the code(s) transmitted from the key 12, via the antenna 24, and forwards them to the body control unit 28 which verifies the authenticity of the received code.

Once the code is verified, the ignition lock 44 is released allowing the vehicle user to either push or rotate an ignition knob to start the engine. The control unit 22 then sends appropriate control signals to the body control module 28, starter motor 46, fuel injection system 48 and meter 50 to start the vehicle.

It is noted that the entry and ignition functions described above relate to normal key operation and the code transmitted to the vehicle in both cases is derived from the main access/entry mechanism within the key 12. During normal key operation, the transponder/emergency key is not used.

The key 12 may fail in a number of ways. For example, the battery may fail thereby preventing transmission of the code signals (38, 54). The key may also be damaged in a manner which interferes with its normal mode of operation. In order to allow the user to continue to gain access to the vehicle in the event of a failure of the primary entry mechanism of the key, the key 12 is provided with an emergency key comprising a transponder, which transponder carries an entry and ignition code for the vehicle.

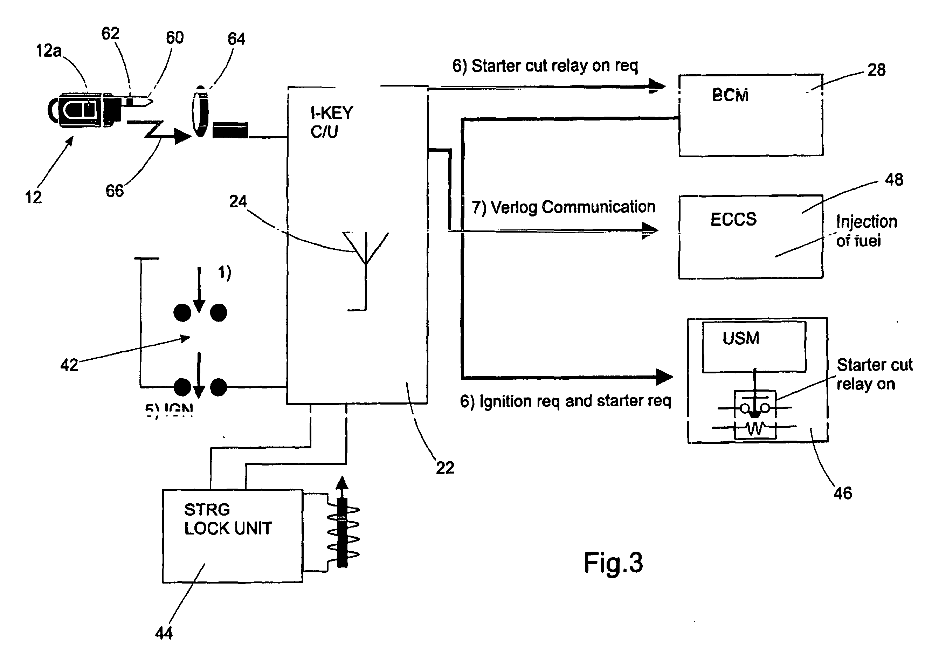

Figure 3 illustrates the emergency key and a backup mode of operation of the key 12 depicted in Figure 1 and 2. As shown in Figure 3, an emergency key 60 has been extended from the key 12. In an alternative arrangement this emergency key 60 may be removable from the key 12 in its entirety. A transponder 62 is located within the emergency key 60 and a transponder code within the transponder 62 allows the user to gain access to the vehicle and to start the vehicle.

The vehicle comprises an antenna arrangement 64 with a recess shaped for receiving the emergency key 62. The antenna arrangement 64 is arranged such that it can inductively couple to the transponder 62 within the key 12 upon insertion of the emergency key 62 into recess of the antenna arrangement. Once the key 62 and antenna arrangement 64 are coupled, the transponder code is read.

In use, the vehicle user inserts the emergency key 62 into the recess of the antenna arrangement 64 and, to start the vehicle, pushes the ignition switch 42. The control unit 22 then interrogates 66 the emergency key 62 and reads the transponder code. If the code is valid for the vehicle then the control unit 22 sends appropriate control signals to the body control module 28, starter motor 46 and fuel injection system 48 to start the vehicle.

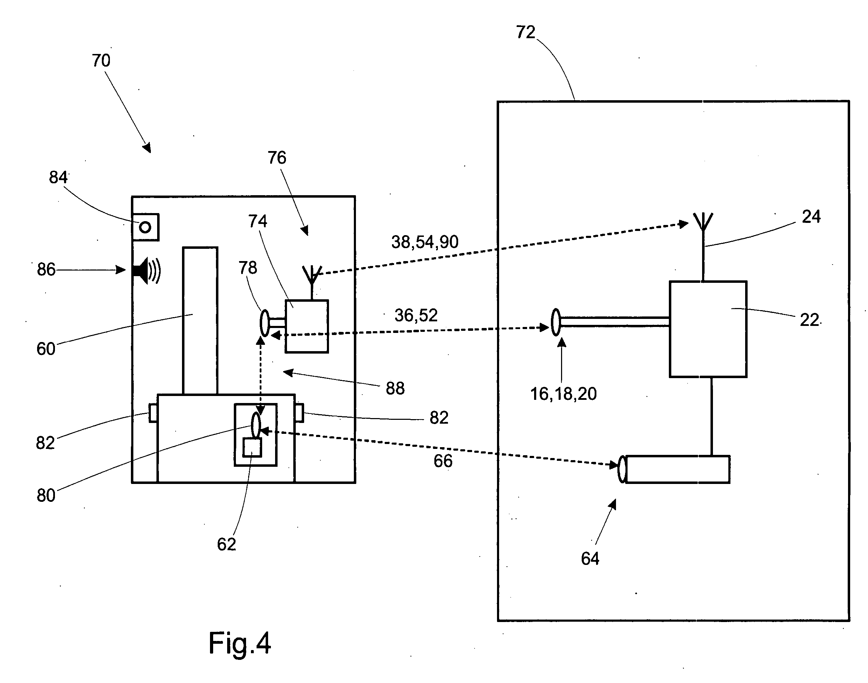

A key device according to an embodiment of the present invention is shown generally as 70 in Figure 4. The key 70 comprises an emergency key 60 and a transponder 62.

Figure 4 further shows a vehicle 72 which comprises an access system with the same components as described in relation to Figures 1 to 3 above, namely a control unit 22, a radio frequency receive antenna 24, a door antenna 16 and an antenna arrangement 64 for use with the emergency key 60/transponder 62 of the key 70.

The key 70 comprises a main key access unit 74 which is operably coupled to a radio frequency transmit antenna 76. The main key access unit comprises an application specific integrated circuit (ASIC) which stores the encrypted code or codes for gaining access to the vehicle. The main key access unit 74 further comprises an inductive antenna 78. The entry unit 74 and antennas 76, 78 comprise the main access/entry mechanism of the key 70.

Normal key operation of the key 70 corresponds to the access (entry and ignition) functions described in relation to Figures 1 and 2 above. To gain entry to the vehicle, the user presses the door switch 14 (not shown in Figure 4) which causes the door antenna 16 to send a short-range signal 36 to the inductive antenna 78 within the key 70. The main code unit 74 then sends a radio frequency signal 38, comprising the entry code or codes stored in the ASIC, via the antenna 76 to the vehicle 72. The rf signal 38 is received by the antenna 24 and authenticated. If the code is valid, the control unit 22 arranges for the vehicle door (not shown in Figure 4) to be opened.

Figure 4 shows a single inductive antenna 78 within the key 70. In practice, there may be up to three such antennas arranged in mutually perpendicular planes in order to allow the short range signal 36 to be received regardless of the orientation of the key 70.

As noted above in the description relating to Figure 1, the rf signal 38 may be initiated by pressing a button on the key 70 which then outputs the radio signal 38 directly.

The key 70 of Figure 4 comprises an emergency key 60 which can be used in the event of failure of the main key mechanism. The emergency key 60 comprises a transponder 62 which is associated with an inductive antenna 80. In use, the inductive antenna 80 couples with the antenna arrangement 64 within the vehicle to facilitate engine ignition.

According to an embodiment of the invention, the key 70 is able to interact with the transponder 62 in order to determine one or more features of the transponder, such as whether it has been removed from the key 70 and also the authenticity of the transponder code etc. To this end, the key further comprises one or more micro-switches 82 which can detect the removal (and insertion) of the emergency key. The key 70 optionally further comprises a visual indication means 84, such as a light or series of lights or alternatively a screen, and an audible notification device 86, such as a sounder.

On removal of the emergency key, the micro-switch(es) 82 is (are) tripped and the control unit 74 is notified. The control unit 74 then outputs a notification signal, either by means of the visible display device 84 or alternatively, or additionally, by means of the sounder 86, regarding the removal of the emergency key 60. The vehicle user is therefore notified whenever the emergency key 60 is removed. The visible notification mechanism may take the form of a changing light display or alternatively a message displayed on a screen.

As an alternative to the micro-switches 82, the key may interact with the emergency key 60 by means of a short-range signal 88 (or series of such signals) sent between one of the inductive antennas 78 and the transponder antenna 80. For example, the control unit 74 may poll the emergency key 60 on a regular basis to determine if it is present within the key 70.

Alternatively, the control unit 74 may signal the emergency key 60 upon vehicle ignition or door entry/locking. If the emergency key is not present, then the control unit may output a notification signal to the visual display means 84 or sounder 86 as described above.

The signal 88 sent between the key antenna 78 and the emergency key antenna 80 is a short-range signal with a range of the order of a few millimetres.

The key 70 may also notify the vehicle 72 of the presence or absence of the emergency key/transponder (60/62) within the key 70 by a signal sent via the rf antenna 76.

In addition to, or as an alternative to, the detection of the transponder 62 within the key 70, the transponder code may, in accordance with a further embodiment of the invention, be authenticated. Authentication of the transponder code may take place within the key 70 or alternatively may take place within the control unit 22 on the vehicle 72.

In order to authenticate the transponder code, the key 70 comprises reader means such that the transponder can be interrogated and the code read. Conveniently, the transponder antenna 80 and inductive antenna 78 form the reader means.

If the code is authenticated within the key 70 itself, then the control unit 74 further comprises a memory area containing details of the transponder and transponder code that should be within the key. The control unit 74 then verifies the transponder code by comparing the code received by the antenna 78 against details of the transponder code stored within its memory area. The validity of the transponder code may be notified to the vehicle user either by means of the visual display means 84 or the sounder 86. A further notification signal may be transmitted by the antenna 78 to the vehicle 72.

Alternatively, as aforesaid, the transponder code may be authenticated on the vehicle 72. In this case, the reader means within the key 70 reads the transponder code as described above and then transmits it 90 to the vehicle 72 via the rf antennas (76 and 24). The vehicle 72, which stores details of the transponder code that should be within the key, compares the code received in the transmission 90 and authenticates (or otherwise) the transponder that is contained within the key 70. In the latter case the vehicle 72 is provided with details of the transponder code for comparison with the code received by the antenna 24 in the signal 90.

If the vehicle is notified that the transponder is not present within the key 70, then one or more of the following actions may be taken by the entry system within the vehicle 72:
1) Use of the emergency key may be restricted such that it can only open or start the vehicle a limited number of times.
2) The speed of the vehicle may be restricted if the emergency key is used.
   Furthermore, if the vehicle is notified that the transponder within the key 70 is not valid, then one or more of the following actions may be taken:
3) The vehicle may disable the original transponder code.
4) A new transponder code may be activated.
5) If in range, the vehicle may send a notification signal back to the key 70 such that the key 70 can alert the user to the invalid code.

It will be understood that the embodiments described above are given by way of example only and are not intended to limit the invention, the scope of which is defined in the appended claims.

The preceding description of preferred embodiments requires that the access system and key device are incorporated within and used with a vehicle. However it is possible to apply the present invention to any device or object that has a secured area. For example, the access system may be used to secure access to a building.

## Claims

1. A key device (12, 70) for use with a complementary access system, the key device comprising:
a transponder (62), the transponder comprising a code for accessing the complementary access system;
interrogation means for determining a feature of the transponder;
output means for outputting a response signal in response to the feature determined by the interrogation means; and
wherein the transponder is removably attached to the key device and the interrogation means comprises at least one micro-switch (32) for detecting the removal of the transponder (62) from the key device (70);
**characterised in that** the interrogation means comprises reader means for reading the transponder code and wherein the response signal comprises a verification request output to the complementary access system, the request comprising the transponder code.

2. A key device as claimed in claim 1, wherein the interrogation means determines the presence of the transponder within the key device.

3. A key device as claimed in any preceding claim, wherein the transponder is associated with first antenna means and the interrogation means is associated with second antenna means, the second antenna means being capable of determining the presence of the transponder by interrogating the first antenna means.

4. A key device as claimed in any preceding claim, wherein the response signal comprises a notification signal regarding the presence of the transponder within the key device.

5. A key device as claimed in claim 4, the notification signal is transmitted from the key device to the complementary access system.

6. A key device as claimed in any preceding claim, wherein the interrogation means is arranged to authenticate the transponder code against a pre-stored copy of the code.

7. A key device as claimed in claim 6, wherein the interrogation means authenticates the transponder code periodically.

8. A key device as claimed in claim 6 or claim 7, wherein the interrogation means authenticates the transponder code each time the key device is used with the complementary access system.

9. A key device as claimed in any of claims 6 to 8, wherein the response signal comprises a notification signal regarding the validity of the transponder within the key device.

10. A key device as claimed in any preceding claim, further comprising first antenna means associated with the transponder and second antenna means associated with the interrogation means wherein the interrogation means is operably coupled to the transponder by the first and second antenna means.

11. A key device as claimed in any preceding claim, wherein the transponder is associated with an emergency key, the emergency key being stored within the key device.

12. A key device as claimed in claim 11, wherein the code within the transponder is authenticated upon insertion of the emergency key into the key device.

## Patentansprüche

1. Schlüsselvorrichtung (12, 70) für die Verwendung mit einem ergänzenden Zutrittssystem, wobei die Schlüsselvorrichtung Folgendes umfasst:
einen Transponder (62), wobei der Transponder einen Code zum Zugreifen auf das ergänzende Zutrittssystem umfasst;
ein Abfragemittel zum Bestimmen eines Merkmals des Transponders;
ein Ausgabemittel zum Ausgeben eines Antwortsignals als Antwort auf das vom Abfragemittel bestimmten Merkmals; und
wobei der Transponder abnehmbar an der Schlüsselvorrichtung befestigt ist und das Abfragemittel mindestens einen Mikroschalter (82) umfasst, um das Abnehmen des Transponders (62) von der Schlüsselvorrichtung (70) zu erkennen;
**dadurch gekennzeichnet, dass** das Abfragemittel ein Lesermittel zum Lesen des Transpondercodes umfasst und wobei das Antwortsignal eine Überprüfungsantragausgabe an das ergänzende Zutrittssystem umfasst, wobei der Antrag den Transpondercode umfasst.

2. Schlüsselvorrichtung nach Anspruch 1, wobei das Abfragemittel die Anwesenheit des Transponders in der Schlüsselvorrichtung bestimmt.

3. Schlüsselvorrichtung nach einem der vorangehenden Ansprüche, wobei der Transponder mit einem ersten Antennenmittel assoziiert ist und das Abfragemittel mit einem zweiten Antennenmittel assoziiert ist, wobei das zweite Antennenmittel in der Lage ist, die Anwesenheit des Transponders durch Abfragen des ersten Antennenmittels zu bestimmen.

4. Schlüsselvorrichtung nach einem der vorangehenden Ansprüche, wobei das Antwortsignal ein Meldesignal betreffend die Anwesenheit des Transponders in der Schlüsselvorrichtung umfasst.

5. Schlüsselvorrichtung nach Anspruch 4, wobei das Meldesignal von der Schlüsselvorrichtung an das ergänzende Zutrittssystem gesendet wird.

6. Schlüsselvorrichtung nach einem der vorangehenden Ansprüche, wobei das Abfragemittel dazu angeordnet ist, den Transpondercode anhand einer im Voraus gespeicherten Kopie des Codes zu authentisieren.

7. Schlüsselvorrichtung nach Anspruch 6, wobei das Abfragemittel den Transpondercode regelmäßig authentisiert.

8. Schlüsselvorrichtung nach Anspruch 6 oder Anspruch 7, wobei das Abfragemittel den Transpondercode jedes Mal authentisiert, wenn die Schlüsselvorrichtung mit dem ergänzenden Zutrittssystem verwendet wird.

9. Schlüsselvorrichtung nach einem der Ansprüche 6 bis 8, wobei das Antwortsignal ein Meldesignal betreffend die Gültigkeit des Transponders in der Schlüsselvorrichtung umfasst.

10. Schlüsselvorrichtung nach einem der vorangehenden Ansprüche, weiter umfassend ein mit dem Transponder assoziiertes erstes Antennemittel und ein mit dem Abfragemittel assoziiertes zweites Antennenmittel, wobei das Abfragemittel durch das erste und das zweite Antennenmittel wirksam an den Transponder gekoppelt ist.

11. Schlüsselvorrichtung nach einem der vorangehenden Ansprüche, wobei der Transponder mit einem Notschlüssel assoziiert ist und der Notschlüssel in der Schlüsselvorrichtung aufbewahrt wird.

12. Schlüsselvorrichtung nach Anspruch 11, wobei der Code im Transponder beim Einstecken des Notschlüssels in die Schlüsselvorrichtung authentisiert wird.

## Revendications

1. Dispositif de clé (12, 70) destiné à être utilisé avec un système d'accès complémentaire, le dispositif de clé comprenant :
un transpondeur (62), le transpondeur comprenant un code pour accéder au système d'accès complémentaire ;
un moyen d'interrogation pour déterminer une caractéristique du transpondeur ;
un moyen de sortie pour produire en sortie un signal de réponse en réponse à la caractéristique déterminée par le moyen d'interrogation ; et
dans lequel le transpondeur est fixé de façon amovible au dispositif de clé et le moyen d'interrogation comprend au moins un micro-commutateur (82) pour détecter le retrait du transpondeur (62) hors du dispositif de clé (70) ;
**caractérisé en ce que** le moyen d'interrogation comprend un moyen de lecteur pour lire le code de transpondeur et dans lequel le signal de réponse comprend une sortie de requête de vérification vers le système d'accès complémentaire, la requête comprenant le code de transpondeur.

2. Dispositif de clé selon la revendication 1, dans lequel le moyen d'interrogation détermine la présence du transpondeur dans le dispositif de clé.

3. Dispositif de clé selon l'une quelconque des revendications précédentes, dans lequel le transpondeur est associé à un premier moyen d'antenne et le moyen d'interrogation est associé à un second moyen d'antenne, le second moyen d'antenne étant capable de déterminer la présence du transpondeur en interrogeant le premier moyen d'antenne.

4. Dispositif de clé selon l'une quelconque des revendications précédentes, dans lequel le signal de réponse comprend un signal de notification concernant la présence du transpondeur dans le dispositif de clé.

5. Dispositif de clé selon la revendication 4, le signal de notification étant transmis par le dispositif de clé au système d'accès complémentaire.

6. Dispositif de clé selon l'une quelconque des revendications précédentes, dans lequel le moyen d'interrogation est agencé pour authentifier le code de transpondeur en comparaison à une copie prémémorisée du code.

7. Dispositif de clé selon la revendication 6, dans lequel le moyen d'interrogation authentifie périodiquement le code de transpondeur.

8. Dispositif de clé selon la revendication 6 ou 7, dans lequel le moyen d'interrogation authentifie le code de transpondeur chaque fois que le dispositif de clé est utilisé avec le système d'accès complémentaire.

9. Dispositif de clé selon l'une quelconque des revendications 6 à 8, dans lequel le signal de réponse comprend un signal de notification concernant la validité du transpondeur dans le dispositif de clé.

10. Dispositif de clé selon l'une quelconque des revendications précédentes, comprenant en outre un premier moyen d'antenne associé au transpondeur et un second moyen d'antenne associé au moyen d'interrogation, le moyen d'interrogation étant couplé opérationnellement au transpondeur par les premier et second moyens d'antenne.

11. Dispositif de clé selon l'une quelconque des revendications précédentes, dans lequel le transpondeur est associé à une clé de secours, la clé de secours étant stockée à l'intérieur du dispositif de clé.

12. Dispositif de clé selon la revendication 11, dans lequel le code dans le transpondeur est authentifié à l'insertion de la clé de secours dans le dispositif de clé.
